(19) Europäisches Patentamt / European Patent Office / Office européen des brevets

(11) **EP 4 145 806 B1**

(12) **EUROPEAN PATENT SPECIFICATION**

(45) Date of publication and mention of the grant of the patent:
**27.03.2024 Bulletin 2024/13**

(21) Application number: **22191481.5**

(22) Date of filing: **22.08.2022**

(51) International Patent Classification (IPC):
*H04L 67/1008* (2022.01)    *H04L 67/2866* (2022.01)
*H04L 67/12* (2022.01)    *H04L 67/56* (2022.01)
*H04L 67/566* (2022.01)    *H04L 67/14* (2022.01)
*H04L 41/0893* (2022.01)    *H04L 47/12* (2022.01)
*H04L 45/02* (2022.01)    *H04W 72/12* (2023.01)
*H04L 41/12* (2022.01)    *H04L 41/14* (2022.01)
*H04L 41/16* (2022.01)    *H04L 47/74* (2022.01)
*H04L 47/70* (2022.01)

(52) Cooperative Patent Classification (CPC):
**H04L 67/1008; H04L 41/12; H04L 47/745;
H04L 47/828; H04L 67/12; H04L 67/14;
H04L 67/2866; H04L 67/56; H04L 67/566;**
H04L 41/145; H04L 41/16

(54) **DEVICE DATA RETRIEVAL**

WIEDERAUFFINDUNG VON VORRICHTUNGSDATEN

EXTRACTION DE DONNÉES DE DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2021 GB 202112682**

(43) Date of publication of application:
**08.03.2023 Bulletin 2023/10**

(73) Proprietor: **Vodafone Group Services Limited Newbury RG14 2FN (GB)**

(72) Inventor: **HAIG, Thomas Andrew London, W2 6BY (GB)**

(74) Representative: **Boult Wade Tennant LLP Salisbury Square House 8 Salisbury Square London EC4Y 8AP (GB)**

(56) References cited:
**WO-A1-2018/207322    US-A1- 2020 336 379
US-A1- 2021 250 282**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to a system and method for gathering data from a network of devices.

**Background of the Invention**

Large numbers of machine-to-machine (M2M) and IoT devices are being deployed. These devices typically have sensors generating data that needs to be collected and retrieved at central locations or servers. This data collection needs to take place as quickly and efficiently as possible. The data collection may be scheduled at regular intervals or collected on-demand depending on each particular application. Therefore, the deployment and management of such large numbers of devices requires careful architectural design with the interactions between particular layer components becoming complex.

Data collection of such devices is typically achieved using a radio link such as wide area networks and telecommunication networks. This limited public communications infrastructure needs to be shared efficiently. However, such resources are often shared between competing or non-cooperating entities creating a competition for limited service capacity.

For example, an entity may schedule batch data collection to occur late at night when they expect the public cellular network to be least congested. However, a separate device network manager may also schedule their data collection at the same or similar time, also believing that network congestion will be lower late at night. The result can be conflicts and bottlenecks requiring devices to stay connected to the telecommunications network for longer than necessary, whilst they wait to upload data or repeatedly attempt to respond to a request for data. This can waste system resources and increase the time for data collection. It may even shorten the useful lifespan of devices, especially if they are battery powered in remote locations where it is difficult or impossible to refresh their battery power supplies.

US 2020/336379 A1 discloses network configurations for SDNs including multiple network nodes and multiple controllers. It uses a different approach of limiting traffic generated by the devices than that of the present invention. It minimizes traffic associated with an SDN by creating node clusters and assigning the clusters to different controllers. Based on the received information, the server limits the number of nodes in each cluster, so as to ultimately minimize traffic between the node clusters and external networks.

Therefore, there is required a system and method that allows data from devices to be retrieved more efficiently without increasing congestion on a telecommunications network that is servicing them.

**Summary of the Invention**

A network of devices may be deployed with each device having the ability to record and pass on data. Preferably, each device can communicate with a cellular telecommunications network or other communications network. Data may be provided by a device in response to a request (e.g. from a server or device manager) or prompted by another event such as an internal schedule or local signal, for example.

Rather than each device sending data directly to an information retrieval server or IoT information retrieval application, groups or a subset of devices communicate with a local network concentrator. Local may mean in direct communication (e.g. wired or wireless). For example, such network concentrators may be located within or be part of a cellular base station. Session management servers or session servers can create communication sessions across a wide area network (WAN), for example, in order to communicate with the devices through each local network concentrator. The session management servers pass on data from each device to the information retrieval server or IoT information retrieval application. A session server therefore can manage, create, close, secure, or adjust communication sessions between devices and a central collection or management entity such as the information retrieval server.

There is a limit to the number of devices that can concurrently or simultaneously communicate with each network concentrator. This may be due to processing, bandwidth, and/or interface limitations. Once this limit or maximum number is reached then any further queries to such devices for data (or devices configured to send data without receiving a query) must wait until the connected or current devices have completed their data transmission (e.g. their communication sessions being closed by a session server). In order to avoid this wait or inefficiency, the information retrieval server obtains information describing the particular devices that are associated with each network concentrator as well as the maximum number of devices that each network concentrator can concurrently accommodate (for any particular technical or administrative reason). This can be done in real-time, in advance or at intervals, for example.

The information retrieval server instructs each session management server to only request data from a limited number of devices for each network concentrator up to and including but not beyond the maximum that each network concentrator can handle (or such a predetermined limit for other reasons).

In accordance with a first aspect there is provided a system comprising: a plurality of devices configured to provide data; a plurality of network concentrators, wherein each network concentrator of the plurality of network concentrators is configured to communicate with a subset of the plurality of devices; a plurality of session management servers configured to retrieve data, obtained by any one or more of the plurality of devices, from the network concentrators; and an information retrieval server configured to: obtain information describing the subset of devices allocated to each of the network concentrators and a maximum number of devices that each of the network concentrators can simultaneous communicate with; and instruct the plurality of session management servers to request data from the plurality of devices by limiting requests for data from the devices such that the number of devices in communication with each network concentrator is at or below the maximum number. Therefore, the system can retrieve as much data as possible without having requests for data fail or devices being unable to provide data more than is necessary. This avoids additional messaging (e.g. failure messages) from taking up system resources such as bandwidth and device power wastefully.

Advantageously, the information retrieval server may be further configured to:
obtain updated information describing the subset of devices allocated to each of the network concentrators and/or the maximum number of devices that each of the network concentrators can simultaneous communicate with. This further reduces system resource waste as the current maximum values and system allocation data remains available and can be used to manage the session management servers. In systems where the information does not change or doesn't change often then such updates may not be required.

Optionally, the information retrieval server may be further configured to:
obtain the updated information after a predetermined time period or when and change in the information occurs. Other mechanisms and schemes may be used to update the information.

Optionally, the information retrieval server may be further configured to:
receive the information from the plurality of network concentrators. The information may be collated, collected or gathered from different entities in the system.

Preferably, the devices may communicate with the network concentrators over a wireless network. In some example implementations, wired communication may be used.

In accordance with a second aspect, there is provided a method for managing data retrieval, the method comprising the steps of:

obtaining information describing an allocation of a subset of devices of a plurality of devices, the subset of devices allocated to each network concentrator of a plurality of network concentrators and a maximum number of devices that each of the network concentrators can simultaneously communication with; and
instructing a plurality of session management servers to request data from the plurality of devices by limiting requests for data from the devices such that the number of devices in communication with each network concentrator is at or below the maximum number.

Advantageously, the method may further comprise the step of:
obtaining updated information describing the subset of devices allocated to each of the network concentrators and/or the maximum number of devices that each of the network concentrators can simultaneous communicate with.

Preferably, the data may be sensor data and/or utility data. For example, the data may be electricity consumption, water meter data, gas consumption or other fixed utilities. The data may also originate from mobile devices (e.g. vehicles). Other data types and sensors may be used.

Optionally, the method may further comprise the step of allocating the subset of devices of the plurality of devices to each of the plurality of network concentrators. The allocation may take various forms.

Advantageously, the subset of devices may be allocated based on local network conditions. For example, a device may be allocated to a particular network concentrator because a wireless signal strength or link quality is greater than other network concentrators in the vicinity or locality. The allocation may also be based on other factors such as distance, for example.

Optionally, the requests for data may be limited by delaying requests for data from one or more devices until data has been received from other devices allocated to the same network concentrator. The requests may be delayed by holding them in a queue, for example.

Optionally, the data are received simultaneously from the maximum number of devices allocated to the same network concentrator by commencing delayed requests as data requests are completed until no delayed request remain. Other rules or schemes may be implemented to limit the requests.

Optionally, the maximum number of devices is not the same for all network concentrators. Different network concentrators may have different capacities or resources, for example.

Optionally, the maximum number may be variable. For example, the maximum number may change by changing an allocation of computing or network resources to particular network concentrators. The maximum number may include a contingency, safety, reserve, or buffer value and this may also be varied.

Optionally, one or more of the devices may operate as both a data provider and a network concentrator. Therefore, devices can have dual functionality. Furthermore, devices may switch between only providing data and acting as network concentrators as capacity requirements change.

Optionally, the method according may further comprise the step of determining the maximum number for each network concentrator by using machine learning to maintain a topology model.

The methods described above may be implemented as a computer program comprising program instructions to operate a computer. The computer program may be stored on a computer-readable medium.

The computer system, server and any other component and/or devices may include a processor or processors (e.g. local, virtual or cloud-based) such as a Central Processing unit (CPU), and/or a single or a collection of Graphics Processing Units (GPUs). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

## Brief description of the Figures

The present invention may be put into practice in a number of ways and embodiments will now be described by way of example only and with reference to the accompanying drawings, in which:

FIG. 1 shows a schematic diagram of an example system for retrieving data from one or more devices;
FIG. 2 shows a flowchart of a method for retrieving data from the devices;
FIG. 3 shows a schematic diagram of a further example system for retrieving data from devices when operating according to the method of figure 2; and
FIG. 4 shows a schematic diagram of a further example system for retrieving data from one or more devices.

It should be noted that the figures are illustrated for simplicity and are not necessarily drawn to scale. Like features are provided with the same reference numerals.

## Detailed description of the preferred embodiments

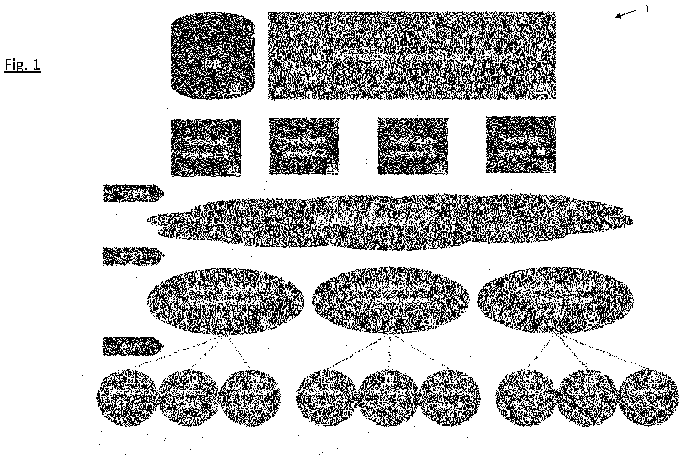

Figure 1 shows a schematic diagram of a system 1 for retrieving data from a plurality of devices 10 that include one or more sensors. There are many devices 10 that may be located at different sites. Each device 10 communicates over a wireless interface (i/f) A with a local network concentrator 20. Each local network concentrator 20 (or network concentrator) can communicate and pass on the data from more than one device 10. Furthermore, each local network concentrator 20 can have a maximum number of connections and so communicate with a maximum number of allocated devices 10 at any one time. Each local network concentrator 20 may be allocated with a greater number of devices 10 than it can simultaneous accommodate (or allowed to communicate simultaneously) with regards to gathering and passing on data. Should a larger number of devices 20 than this maximum number attempt to send data through a particular local network concentrator at the same time (e.g. because they are scheduled to do so or because simultaneous requests for data have been made) then some devices may need to wait. The local network concentrators 20 may be located at or within a base station (e.g. cell site, node B, or eN B) and so have a direct cellular connection with devices 10 that are allocated to it or otherwise associated with it.

Furthermore, the particular devices 10 that are allocated to a local network concentrator 20 or in current communication with it (e.g. have an active communication session) can change as local network and radio frequency (RF) conditions change. For example, a particular device 10 may under some circumstances switch or change their allocation to a different local network concentrator 20. This allocation may be determined at the device 10, at the local network concentrator 20 or elsewhere. In figure 1, nine devices 10 are shown associated or allocated to three separate local network concentrators 20. There are also the same number of devices 10 (three) allocated to each local network concentrator 20. However, in any particular system, different numbers of devices 10 may be present and each local network concentrator 20 may be allocated any number of devices 10, which may be changed.

The local network concentrators 20 are in communication with a wide area network (WAN) 60 such as the internet, using interface (i/f) B. A plurality of session management or session servers 30 are also present in the system 10. These may be in communication through the WAN 60 using a further interface (i/f) C. An internet of things (IoT) information retrieval application, or information retrieval server 40 controls the session servers 30. In an example implementation, the session servers 30 may be located local or close to the information retrieval server 40. The information retrieval server 40 gathers information describing which devices 10 are allocated or associated with each local network concentrator and the maximum number of devices that can simultaneously send or transmit data to each local network concentrator 20 or have an active communication session. This information may take the form of a network topology. These data are stored within database 50 and/or elsewhere (e.g. a memory cache). As the device allocation changes and if the maximum number also changes then these data are updated either in real-time or at intervals.

The information retrieval server 40 controls the session server 30. Should a large number (or even a small number) of requests for sensor data from many devices 10 be required then such an event is managed by the information retrieval server 40 in light of the stored data. During such a particular event, the information retrieval server 40 instructs any or all of the session servers 30 to request the data from the devices 10. However, the information retrieval server 40 limits the requests to particular devices 10 so that each local network concentrator 20 does not simultaneously receive data from more than its maximum number of concurrent connections to devices 10. It can do this by adjusting particular communications sessions so that requests are delayed or held back for particular devices 10 in order to allow other devices to complete the sending of data in response to a request. This can be done without sending the request to those devices 10 so that they can remain in a low powered state (i.e. requiring less power or system resources than when they are actively processing a request or attempting to communicate to their allocated local network concentrator 20).

Only when earlier requests are completed and devices 10 are no longer in communication with the local network concentrator 20 are further requests issued to obtain the data of waiting, delayed, sleeping or dormant devices 10. This process is managed by the information retrieval server 40 that instructs particular session servers 30 to issue individual requests. New requests are also limited to maintain a number of concurrent connections to each local network concentrator 20 up to but not exceeding its maximum capacity or value.

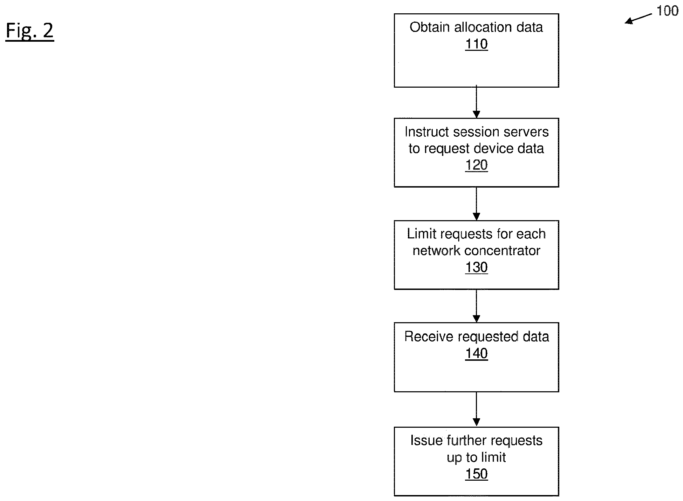

Figure 2 shows a flowchart of a simplified method 100 used to operate the system 10 described with reference to Figure 1. At step 110, allocation data is obtained. This may be obtained from each local network concentrator through the WAN 60 either directly or through individual session servers 30. These data are stored in database 50 by the information retrieval server 40.

At step 120, the information retrieval server 40 instructs any or all of the session servers 30 to request device data. At step 130, these requests are limited up to the maximum of allowable connections or communication sessions with devices 10 to each network concentrator. At step 140, the data are received (e.g. at the information retrieval server 40) from each device 10 through the connected local network concentrator 20 over the WAN 60 with the communications sessions controlled by each session server 30. Should further requests be necessary to obtain additional data then these further requests are issued up to the maximum limit for concurrent communications sessions with each local network concentrator at step 150. Requests may therefore be issued in a staggered way keeping as many devices 10 active but avoiding devices 10 from receiving requests when their allocated local network concentrator 20 cannot receive their data (because it already has the maximum number of allowable or possible active communication sessions). The devices may store these data in memory until a request is received or generated the data (e.g. from a sensor) following a request.

Large-scale IoT platforms are being deployed at this time. An objective of device operators is to collect a full data set from devices and their connected sensors, as quickly and efficiently as possible, in a scheduled or on-demand manner. Full deployments of such systems may involve complex multi-tiered architectures and the interaction between layer components also adds complexity. However, an end goal of maximum efficiency may be expressed as: maximum data, collected in minimum time with lower or the lowest radio or computing resource expenditure. Therefore, platform resources should be efficiently directed and assigned to maximise the rate of successful data acquisition.

Multiple systems may be deployed by non-cooperating operators on single network platforms and they will therefore compete for service capacity. For example, public cellular platforms may provide such service capacity.

These systems may be stand-alone platforms, or may be a functional component of larger platforms. Very large IoT Information Retrieval Platforms (IIRP) including the information retrieval application or server 40 may be configured to "Scale-horizontally", with one or more session or connection servers 30, which handle dialogues with a number of sensor nodes or devices 10. Session servers 20 may be dynamically created/destroyed according to platform load (e.g. as virtual servers within cloud-based computing environments). Each device 10 or sensor node (SN) to session server 30 dialogue may take the form of a structured sequence of messages that may include wake-up, authentication, time synchronisation, data retrieval, alarm retrieval, command or configuration delivery and, finally, session closure at an application layer. Each individual message may be carried over an IP network using TCP or UDP transports, for example, although bespoke networking architectures may be used.

Many IIRP may be deployed across networks that have capacity constraints associated with them at the edge of the network and associated with, for example and non-exhaustively:

> edge SN (sensor node or device 10) to concentrator radio capacity (A interface);
> LNC (local network concentrator) concurrent session capacity (C-n processing capacity);
> LNC scheduling capacity (C-n processing capacity);

LNC to core network backhaul capacity (B interface); and
WAN network to session server 20 delivery network capacity (C interface).

These constraints may not be advertised or known to individual IIRPs except by the observation of session failures and poor performance. Operation without regard to localised capacity can lead to several effects:
Congestion at constraint points within the network, leading to a degraded service experience for both the IIRP and other users of the (telecommunications) network.

A lower than achievable performance of the IIRP, when considered against the performance that may be achieved if these capacity constraints are considered and accommodated.

Excess battery consumption by SN (device 10) at the edge of the network, caused by some combination of:

The necessity to process additional retrieval attempts.
The necessity to retransmit data packets which have been lost or discarded in transit as a result of capacity over-subscription.
Extended radio activation periods caused by extended LNC scheduler wait-times.
Non-optimal use of computing resource at the IIRP and session servers 20, caused by the necessity to undertake multiple retries and manage the impact of failed retrieval events. This non-optimal use can manifest as either a requirement for larger computing resources or additional computing resources, which can be a direct cost in public cloud based environments.

Although the network does not advertise or expose data related to the network capacity, it may be that information relating to the capacity thresholds can be derived by:

direct retrieval from the sensor nodes at the edge of the network;
observation of the network performance at a WAN 60 or session server 20;
an understanding of the physics of the subject network (e.g. N concurrent timeslots in the air interface per node);
agreement in dialogue with a network operator; and/or
some combination of the above.

Logical topology is also a factor in macro level systems performance. Devices or SNs 10 may be uniquely associated (Registered) with a single (or primary) local network concentrator 20 at any point in time. Most wireless networks are dynamic and devices 10 may move (or are moved) between local network concentrators 20, due for instance to load balancing or changes in local radio environments. However, at any given instant the network may be broadly static. Often, IIRPs do not record or approximate the association between local network concentrator 20 and devices 10. In many (particularly public) network architectures, it is not possible to query the local network concentrator 20 to determine which devices 10 are associated with which local network concentrator 20. However, it is frequently possible for devices 10 to be able to report on the currently associated devices 10, and so a logical topology mapping can be established at the I IRC (e.g. at the information retrieval server 40).

When neither of these criteria (constraints and topology) are known or captured, a system 1 undertaking a bulk retrieval often attempts to retrieve information from devices 10 in an arbitrary order (such as by serial number, or IP address or any other convenient key) and not considering either capacity or edge network logical topology. This simplistic approach can lead to capacity issues if many read attempts are directed concurrently towards devices 10 associated with a single local network concentrator 20.

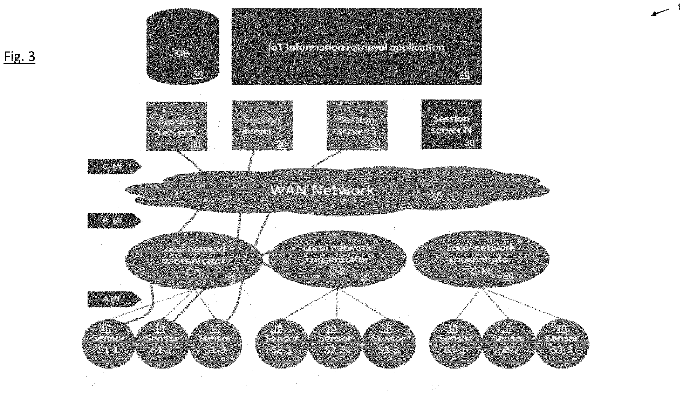

The following provides an example operation of the system 1 without the benefit of method 100. This example is provided with reference to figure 3. This figure is similar to figure 1 with the same reference numerals used to indicate the same components. However, individual sessions and requests for data issued through the sessions servers 30 are indicated in this figure and wavy lines.

Assume each local network concentrator 20 has a concurrent dialogue capacity of two.

Assume each session server 30 has a capacity of one.

In rapid (near or actual concurrent) succession the information retrieval server 40 instructs the session server (SS) 30 by identifier such that:-
SS1 attempts a read of device S1-1 (which is associated with or allocated to local network concentrator 20 C-1).

SS2 attempts a read of S1-2 (which is associated with C-1).

SS3 attempts a read of S1-3 (which is associated with C-1).

Each session takes a finite period to execute and close. Therefore, there is a situation in which the whole system attempts 3 concurrent sessions via local network concentrator 20 C-1.

One of these attempts (e.g. S1-3) will fail because concentrator capacity is exceeded.

Depending upon system design the SS 30 hosting the failed session will either retry (possibly leading to 2nd, 3rd, 4th etc. failures) or notify a failure to the information retrieval server 40 and be re-tasked.

Similar events are likely at local network concentrator 20 C-2 and C-3.

This example is provided with unusually low thresholds and capacities for illustrative purposes. However, the impact of hitting a capacity constraint is demonstrated: Excess computing effort is expended dealing with capacity failures which could have been avoided using the method 100 and system 1, previously described.

Excess network traffic is created over A, B and C interfaces, potentially leading to a higher network expenditure.

The data collection cycle time is extended.

Therefore, this demonstrates that the goal of maximising the amount of data collected in the minimum possible period is not met.

The system described above makes use of a distributed collection and reporting of network constraint information, which informs a coordinating algorithm implemented at the core application (e.g. within the information retrieval server 40).

The method includes: Each device 10 reporting (to the information retrieval server 40 via session servers 30) its associated local network concentrator 20 at the time of registration/re-registration with the respective local network concentrator 20.

The information retrieval server 40 building and maintaining a logical model (logical network topology) of the device 10 to local network concentrator (LNC) 20 association (the logical model may be stored in various ways, e.g. within database 50).

Establishing a nominal threshold of maximum concurrent sessions per local network concentrator 20 (the threshold may be global or unique per local network concentrator 20).

An active scheduler function maintaining a logical model of the SS-LNC-Device assignments and ensuring capacity thresholds are not breached.

Using the logical model in light of the nominal threshold to determine a next addressable device 10 or sensor node.

The model can be applied in both "Pull" and "Push" oriented systems.

Benefits of this system 1 and method 100 include:

improving platform performance (maximum data retrieved in minimum time),
reducing network congestion (fewer failed sessions and retransmissions),
reducing network costs where these are a function of data consumption,
increasing service experience for all network users (if this is a shared network),
reducing required computing capacity and potentially cloud computing costs.

This method is implemented in software and also sensor nodes or devices 10, for optimising the rate at which IoT information can be retrieved from complex wide area networks that can have complex capacity constraints. The method 100 can be applied in several ways and may rely on distributed collection and reporting of network constraint information, which informs a coordinating algorithm implemented at a core application, e.g. within the information retrieval server 40.

With reference to the example provided above, if the system were now to be implemented such that: A logical model of the device 10 to LNC 20 association is built and maintained over time by the information retrieval server 40. The model is stored either in volatile memory, or in persistent storage within the associated database 50 or in some hybrid form of hybrid and persistent storage, for example.

To facilitate the creation of the logical network topology, each device 10 reports its associated LNC 20 at the time of registration/re-registration with a given LNC 20.

A nominal threshold of maximum concurrent sessions per LNC 20 is established. This need not be a single global threshold but could be unique per LNC 20. Example methods of establishing thresholds are discussed below.

An active scheduler function may maintain a model of the SS-LNC-Device assignments and ensures capacity thresholds are not breached.

Then, the determination of a next addressable device 10 can be more intelligent and strategies can be derived to accommodate these capacity constraints to make best use of computing resources and potentially battery capacity at the edge of the network.

The following further worked example demonstrates congestion avoidance (i.e. operating the system 1 according to method 100): As example, referring to figure 1: Assume each LNC 20 has a concurrent dialogue capacity of two.

Assume each SS 30 has a capacity of one (i.e. a single LNC 20).

Assume the topology model is built and accurate.

In rapid (near concurrent) succession the information retrieval server 40 tasks its SSs 30 by identifier such that:- Scheduler (e.g. process or thread within information retrieval server 40) examines S1-1 and notes that it is associated with C1 currently at load (0).

SS1 is assigned to read S1-1 transiting C1.

C1 current load is incremented => 1.

Scheduler examines S1-2 and notes that it is associated with C1 currently at load (1).

SS2 is assigned to read S1-2 transiting C1

C1 current load incremented => 2

Scheduler examines S1-3 and notes that it is associated with C1 currently at load (2), which is its maximum load.

S1-3 is returned to a queue of nodes awaiting reads.

Scheduler examines S2-1 and notes that it is associated with C2 currently at load (0).

SS3 is assigned to read S2-1 transiting C2.

C2 current load incremented =>1.

After some period of time, SS1 completes is dialogue with S1-1.

The session with S1-1 is closed.

C1 load is decremented => 1.

After some period of time, scheduler re-examines S1-3 and notes that it is associated with C1 currently at load (1).

SSn is assigned to read S1-3 transiting C1.

C1 current load is incremented => 2.

Note that through use of a logical topological model, no oversubscription of any LNC 20 takes place and the assignment of a device 10 is only undertaken to SS 30 when LNC 20 capacity is available. There are no failed transactions (in this example) as a result of LNC 20 oversubscription. The excess computing and network resources created by processing failed transactions are saved by this approach.

Note that this outcome is based on the idealised assumption that total LNC 20 capacity is available for scheduling only by this single IIRP platform and there are no competing users or systems. Below we discuss impacts of contending IIRP traffic and example strategies for addressing this.

The issue of non-deterministic resource contention:

As can be seen above, processing efficiencies are achievable through construction and maintenance of a logical topological constraint model (e.g. information describing the subset of devices allocated to each of the network concentrators and a maximum number of devices that each of the network concentrators can simultaneous communicate with). In the case where the entire network has no third party contention, a "perfect" uncontended outcome is achievable and the whole system may exhibit maximum efficiency.

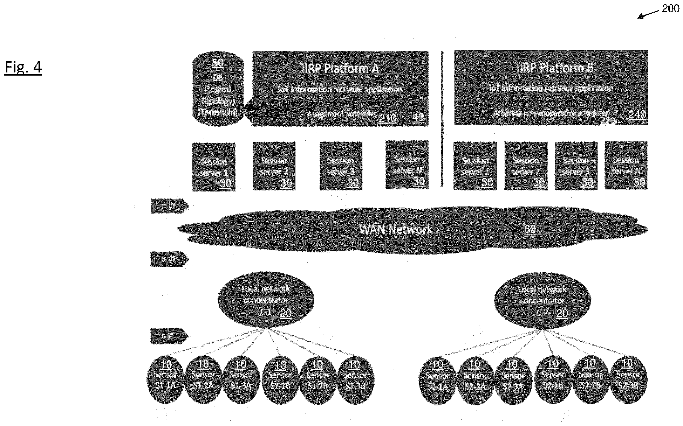

Introducing additional, non-cooperative, non-deterministic network contention to the model may reduce the efficiency of this model (even though benefits still remain). The contending platform(s), IIRP-B, may attempt to assign capacity in an arbitrary and non-deterministic manner. Such a situation is illustrated schematically in figure 4.

For the purpose of this discussion, IIRP-B 240 (e.g. another information retrieval server) could represent a combined activity of one or more non-cooperating IIRPs. Whether individual or multiple contending activities are occurring, non-deterministic contention (noise) may be introduced into the model and only the magnitude of contention increases.

The impact of this non-deterministic contention is to degrade the accuracy of the constraint model. The topological association remains correct, however the contending systems utilise the resource without notification or regard to the demands of the subject IIRP (e.g. information retrieval server 40), leading to unexpected failures in SS 30 dialogue assignments. The challenge is therefore to design strategies to gracefully manage this non-deterministic contention. Several approaches and enhancements to the method 100 and their combinations are described below:

Good Citizen Approach:

Static capacity restriction: This may involve artificially restricting the available capacity via any arbitrary concentrator to a fraction of its known total capacity, leaving an overhead of capacity for contending systems to use. (e.g. if LNC 20 physical capacity is 20 concurrent sessions, then assign a system threshold of 10 concurrent sessions or a number below the actual maximum). In some examples this may be a predetermined percentage (e.g. 90%, 80%, 50%, or anywhere down to 10% in extreme circumstances or varied, perhaps in real-time, depending on the number of competing independent systems). The system may be tested to determine an optimum reduction (i.e. reduce contention without overly limiting capacity). The arbitrary amount may be determined by an arbitrary non-cooperative scheduler 220 within any or all of the information retrieval servers 40, 240. In any case, the assignment of requests for data using the session servers 30 may be carried out by an assignment scheduler 210 within each information retrieval server 40, 240.

This approach makes the assumption that all platform users are also "Good Citizens" and is unlikely to be successful in isolation as the action taken if LNC 20 actual capacity is found to be exhausted, despite the IIRP model suggesting that capacity should be available but not apparent. A more sophisticated solution may be used.

Static Embargo Approach:

Either combined with the Good Citizen model or not, embargo new sessions on an LNC 20 for some static duration after the first session failure. Again, this information may be gathered by the information retrieval server or servers 40 and/or stored with their associated databases 50.

This approach acknowledges that if an LNC 20 is oversubscribed, constantly trying to place new sessions is unhelpful, a waste of computing capacity and may impact LNC 20 performance, making life worse for all network users. Instead, concentrate SS 30 capacity onto nodes or LNCs 20 that are not oversubscribed.

A blacklisting status may be expired after timer expiry or after a pre-existing SS 30 dialogue on the blacklisted node successfully closes.

Dynamic Embargoing Approach:

Either combined with the Good Citizen model or not, embargo new session attempts on an LNC 20 for some calculated duration after the first session failure, for example:-

Embargo Period[n] = [Embargo Increment (e.g. 1 minute)] * [Number of concurrent failures]

Therefore, the first failure would cause the system to back-off for a time period (e.g.1 minute), the second for a further time period that may be greater or increase (e.g. 2 minutes), etc. It may be that after some threshold of consecutive session failures of time, the system declares the LNC 20 offline and ignores it from further processing in this collection event (e.g. a mass collection of data from all devise 10).

Again, blacklisting status can be expired after timer expiry or after a pre-existing SS dialogue on the blacklisted node successfully closes.

This approach acknowledges that if an LNC 20 is oversubscribed, constantly trying to place new sessions is unhelpful, a waste of computing capacity and may impact LNC 20 performance, making life worse for all network users. Instead, concentrate SS capacity onto nodes or LNCs 20 that are not oversubscribed.

All of the methods considered so far retain LNC 20 capacity at some static value. It may be that there are benefits to be taken in dynamically adjusting the LNC 20 threshold depending upon experienced capacity restrictions:

Dynamic Embargoing and capacity adjustment: Embargo new session attempts on:

Methods by which LNC thresholds may be determined. Examples of such strategies may include:

Continuous maximum concurrent session limits per group.

Adaptive maximum session limits per sensor group. This adaptive limit may be set on a per node (e.g. LNC 20) basis by for instance applying a machine learning algorithm to data relating to session performance. Staggering of sensor reporting cycles over time may also avoid over-subscription. Strategies can be devised that are able to address both application-initiated and edge device-initiated transaction sequences.

As will be appreciated by the skilled person, details of the above embodiment may be varied without departing from the scope of the present invention, as defined by the appended claims.

For example, only one or two information retrieval servers 40 are shown in the examples. However, any number may be present in the system. Similarly, different systems may implement different numbers of sessions servers and devices.

Many combinations, modifications, or alterations to the features of the above embodiments will be readily apparent to the skilled person and are intended to form part of the invention. Any of the features described specifically relating to one embodiment or example may be used in any other embodiment by making the appropriate changes. The scope of protection of the invention is however defined by the appended claims.

**Claims**

1. A system comprising:

   a plurality of devices configured to provide data;
   a plurality of network concentrators, wherein each network concentrator of the plurality of network concentrators is configured to communicate with a subset of the plurality of devices;

a plurality of session management servers configured to retrieve data, obtained by any one or more of the plurality of devices, from the network concentrators; and

an information retrieval server configured to:

obtain information describing the subset of devices allocated to each of the network concentrators and a maximum number of devices that each of the network concentrators can simultaneous communicate with; and

instruct the plurality of session management servers to request data from the plurality of devices by limiting requests for data from the devices such that the number of devices in communication with each network concentrator is at or below the maximum number.

**2.** The system of claim 1, wherein the information retrieval server is further configured to:

obtain updated information describing the subset of devices allocated to each of the network concentrators and/or the maximum number of devices that each of the network concentrators can simultaneous communicate with.

**3.** The system of claim 1, wherein the information retrieval server is further configured to:

obtain the updated information after a predetermined time period or when and change in the information occurs.

**4.** The system according to any previous claim, wherein the information retrieval server is further configured to:

receive the information from the plurality of network concentrators.

**5.** The system according to any previous claims, wherein the devices communicate with the network concentrators over a wireless network.

**6.** A method for managing data retrieval, the method comprising the steps of:

obtaining information describing an allocation of a subset of devices of a plurality of devices, the subset of devices allocated to each network concentrator of a plurality of network concentrators and a maximum number of devices that each of the network concentrators can simultaneously communication with; and

instructing a plurality of session management servers to request data from the plurality of devices by limiting requests for data from the devices such that the number of devices in communication with each network concentrator is at or below the maximum number.

**7.** The method of claim 6 further comprising the step of:

obtaining updated information describing the subset of devices allocated to each of the network concentrators and/or the maximum number of devices that each of the network concentrators can simultaneous communicate with.

**8.** The method of claim 6 or claim 7, wherein the data is sensor data and/or utility data.

**9.** The method according to any of claims 6 to 8 further comprising the step of allocating the subset of devices of the plurality of devices to each of the plurality of network concentrators.

**10.** The method according to any of claims 6 to 9, wherein the subset of devices are allocated based on local network conditions.

**11.** The method according to any of claims 6 to 10, wherein the requests for data are limited by delaying requests for data from one or more devices until data has been received from other devices allocated to the same network concentrator.

**12.** The method of claim 11, wherein data are received simultaneously from the maximum number of devices allocated to the same network concentrator by commencing delayed requests as data requests are completed until no delayed request remain.

**13.** The method according to any of claims 6 to 12, wherein the maximum number of devices is not the same for all network concentrators; and/or

wherein the maximum number is variable.

**14.** The method according to any of claims 6 to 13, wherein one or more of the devices operates as both a data provider and a network concentrator.

**15.** The method according to any of claims 6 to 14 further comprising the step of:
determining the maximum number for each network concentrator by using machine learning to maintain a topology model.

**Patentansprüche**

**1.** System, umfassend:
eine Vielzahl an Vorrichtungen, die zum Bereitstellen von Daten konfiguriert sind:

eine Vielzahl an Netzwerkkonzentratoren, wobei jeder Netzwerkkonzentrator der Vielzahl an Netzwerkkonzentratoren zum Kommunizieren mit einer Teilmenge der Vielzahl an Vorrichtungen konfiguriert ist;
eine Vielzahl an Sitzungsverwaltungsservern, die zum Abrufen von Daten, die von einer oder mehreren der Vielzahl an Vorrichtungen erhalten wurden, von den Netzwerkkonzentratoren konfiguriert sind; und
einen Informationsabrufserver, konfiguriert zum:

Erhalten von Informationen, beschreibend die Teilmenge der Vorrichtungen, die jedem der Netzwerkkonzentratoren zugeordnet sind, und eine maximale Anzahl an Vorrichtungen, mit denen jeder der Netzwerkkonzentratoren gleichzeitig kommunizieren kann; und
Anweisen der Vielzahl an Sitzungsverwaltungsservern zum Anfordern von Daten von der Vielzahl an Vorrichtungen, indem Anforderungen nach Daten von den Vorrichtungen derart begrenzt werden, dass die Anzahl an Vorrichtungen, die mit jedem Netzwerkkonzentrator kommunizieren, der maximalen Anzahl entspricht oder darunter liegt.

**2.** System nach Anspruch 1, wobei der Informationsabrufserver ferner konfiguriert ist zum:
Erhalten von aktualisierten Informationen, beschreibend die Teilmenge der Vorrichtungen, die jedem der Netzwerkkonzentratoren zugeordnet sind, und/oder die maximale Anzahl an Vorrichtungen, mit denen jeder der Netzwerkkonzentratoren gleichzeitig kommunizieren kann.

**3.** System nach Anspruch 1, wobei der Informationsabrufserver ferner konfiguriert ist zum:
Erhalten der aktualisierten Informationen nach einem vorab bestimmten Zeitraum oder bei Änderungen an den Informationen.

**4.** System nach einem vorstehenden Anspruch, wobei der Informationsabrufserver ferner konfiguriert ist zum:
Empfangen der Informationen von der Vielzahl an Netzwerkkonzentratoren.

**5.** System nach einem vorstehenden Anspruch, wobei die Vorrichtungen über ein drahtloses Netzwerk mit den Netzwerkkonzentratoren kommunizieren.

**6.** Verfahren zum Verwalten des Datenabrufs, wobei das Verfahren die Schritte umfasst des:

Erhaltens von Informationen, beschreibend eine Zuordnung einer Teilmenge von Vorrichtungen aus einer Vielzahl an Vorrichtungen, wobei die Teilmenge von Vorrichtungen jedem Netzwerkkonzentrator einer Vielzahl an Netzwerkkonzentratoren zugeordnet ist, und eine maximale Anzahl an Vorrichtungen, mit denen jeder der Netzwerkkonzentratoren gleichzeitig kommunizieren kann; und
Anweisens einer Vielzahl an Sitzungsverwaltungsservern zum Anfordern von Daten von der Vielzahl an Vorrichtungen, indem Anforderungen nach Daten von den Vorrichtungen derart begrenzt werden, dass die Anzahl an Vorrichtungen, die mit jedem Netzwerkkonzentrator kommunizieren, der maximalen Anzahl entspricht oder darunter liegt.

**7.** Verfahren nach Anspruch 6, ferner umfassend den Schritt des:
Erhaltens von aktualisierten Informationen, beschreibend die Teilmenge der Vorrichtungen, die jedem der Netzwerkkonzentratoren zugewiesen sind, und/oder die maximale Anzahl an Vorrichtungen, mit denen jeder der Netzwerkkonzentratoren gleichzeitig kommunizieren kann.

**8.** Verfahren nach Anspruch 6 oder Anspruch 7, wobei es sich bei den Daten um Sensordaten und/oder Nutzdaten handelt.

**9.** Verfahren nach einem der Ansprüche 6 bis 8, ferner umfassend den Schritt des Zuordnens der Teilmenge von Vorrichtungen aus der Vielzahl an Vorrichtungen zu jedem der Vielzahl an Netzwerkkonzentratoren.

**10.** Verfahren nach einem der Ansprüche 6 bis 9, wobei die Teilmenge von Vorrichtungen auf Basis lokaler Netzwerkbedingungen zugeordnet wird.

**11.** Verfahren nach einem der Ansprüche 6 bis 10, wobei die Anforderungen nach Daten begrenzt werden, indem Anforderungen nach Daten von einer oder mehreren Vorrichtungen verzögert werden, bis Daten von anderen Vorrichtungen empfangen werden, die demselben Netzwerkkonzentrator zugewiesen sind.

**12.** Verfahren nach Anspruch 11, wobei die Daten gleichzeitig von der maximalen Anzahl an Vorrichtungen empfangen werden, die demselben Netzwerkkonzentrator zugeordnet sind, indem verzögerte Anforderungen begonnen werden, sobald Datenanforderungen fertiggestellt werden, bis keine verzögerte Anforderung mehr übrig ist.

**13.** Verfahren nach einem der Ansprüche 6 bis 12, wobei die maximale Anzahl an Vorrichtungen nicht dieselbe für alle Netzwerkkonzentratoren ist; und/oder
wobei die maximale Anzahl variabel ist.

**14.** Verfahren nach einem der Ansprüche 6 bis 13, wobei eine oder mehrere der Vorrichtungen sowohl als ein Datenbereitsteller als auch als ein Netzwerkkonzentrator fungiert.

**15.** Verfahren nach einem der Ansprüche 6 bis 14, ferner umfassend den Schritt des:
Bestimmens der maximalen Anzahl für jeden Netzwerkkonzentrator, indem mittels maschinellem Lernen ein Topologiemodell unterhalten wird.

**Revendications**

**1.** Un système comprenant :

une pluralité de dispositifs configurés de façon à fournir des données,
une pluralité de concentrateurs de réseau, où chaque concentrateur de réseau de la pluralité de concentrateurs de réseau est configuré de façon à communiquer avec un sous-ensemble de la pluralité de dispositifs,
une pluralité de serveurs de gestion de session configurés de façon à récupérer des données, obtenues par un quelconque ou plusieurs dispositifs de la pluralité de dispositifs, à partir des concentrateurs de réseau, et
un serveur de récupération d'informations configuré de façon à :

obtenir des informations décrivant le sous-ensemble de dispositifs attribué à chacun des concentrateurs de réseau et un nombre maximal de dispositifs avec lesquels chacun des concentrateurs de réseau peut communiquer simultanément, et
ordonner à la pluralité de serveurs de gestion de session de demander des données à la pluralité de dispositifs par la limitation de demandes relatives à des données provenant des dispositifs de sorte que le nombre de dispositifs en communication avec chaque concentrateur de réseau soit à ou sous le nombre maximal.

**2.** Le système selon la Revendication 1, où le serveur de récupération d'informations est configuré en outre de façon à :
obtenir des informations actualisées décrivant le sous-ensemble de dispositifs attribué à chacun des concentrateurs de réseau et/ou le nombre maximal de dispositifs avec lesquels chacun des concentrateurs de réseau peut communiquer simultanément.

**3.** Le système selon la Revendication 1, où le serveur de récupération d'informations est configuré en outre de façon à :
obtenir les informations actualisées après une période temporelle prédéterminée ou lorsqu'une modification des informations se produit.

**4.** Le système selon l'une quelconque des Revendications précédentes, où le serveur de récupération d'informations est configuré en outre de façon à :
recevoir les informations à partir de la pluralité de concentrateurs de réseau.

5. Le système selon l'une quelconque des Revendications précédentes, où les dispositifs communiquent avec les concentrateurs de réseau par l'intermédiaire d'un réseau sans fil.

6. Un procédé de gestion de récupération de données, le procédé comprenant les opérations suivantes :

l'obtention d'informations décrivant une attribution d'un sous-ensemble de dispositifs d'une pluralité de dispositifs, le sous-ensemble de dispositifs attribué à chaque concentrateur de réseau d'une pluralité de concentrateurs de réseau et un nombre maximal de dispositifs avec lesquels chacun des concentrateurs de réseau peut communiquer simultanément, et
l'ordre donné à une pluralité de serveurs de gestion de session de demander des données à la pluralité de dispositifs par la limitation de demandes relatives à des données provenant des dispositifs de sorte que le nombre de dispositifs en communication avec chaque concentrateur de réseau soit à ou sous le nombre maximal.

7. Le procédé selon la Revendication 6 comprenant en outre l'opération suivante :
l'obtention d'informations actualisées décrivant le sous-ensemble de dispositifs attribué à chacun des concentrateurs de réseau et/ou le nombre maximal de dispositifs avec lesquels chacun des concentrateurs de réseau peut communiquer simultanément.

8. Le procédé selon la Revendication 6 ou 7, où les données sont des données de capteur et/ou des données de services publics.

9. Le procédé selon l'une quelconque des Revendications 6 à 8 comprenant en outre l'opération d'attribution du sous-ensemble de dispositifs de la pluralité de dispositifs à chaque concentrateur de réseau de la pluralité de concentrateurs de réseau.

10. Le procédé selon l'une quelconque des Revendications 6 à 9, où le sous-ensemble de dispositifs est attribué en fonction de conditions de réseau locales.

11. Le procédé selon l'une quelconque des Revendications 6 à 10, où les demandes relatives à des données sont limitées par le retardement de demandes relatives à des données provenant d'un ou de plusieurs dispositifs jusqu'à la réception de données à partir d'autres dispositifs attribués au même concentrateur de réseau.

12. Le procédé selon la Revendication 11, où des données sont reçues simultanément à partir du nombre maximal de dispositifs attribués au même concentrateur de réseau en commençant par des demandes retardées à mesure que des demandes de données sont achevées jusqu'à ce qu'il ne reste plus aucune demande retardée.

13. Le procédé selon l'une quelconque des Revendications 6 à 12, où le nombre maximal de dispositifs n'est pas le même pour la totalité des concentrateurs de réseau, et/ou
où le nombre maximal est variable.

14. Le procédé selon l'une quelconque des Revendications 6 à 13, où un ou plusieurs des dispositifs fonctionnent à la fois en tant que fournisseur de données et concentrateur de réseau.

15. Le procédé selon l'une quelconque des Revendications 6 à 14 comprenant en outre l'opération suivante :
la détermination du nombre maximal pour chaque concentrateur de réseau au moyen d'un apprentissage par ordinateur de façon à conserver un modèle de topologie.

Fig. 1

Fig. 2

```
          ┌─────────────────────┐           ← 100
          │  Obtain allocation data │
          │         110          │
          └─────────────────────┘
                     │
                     ▼
          ┌─────────────────────┐
          │ Instruct session servers│
          │ to request device data │
          │         120          │
          └─────────────────────┘
                     │
                     ▼
          ┌─────────────────────┐
          │  Limit requests for each│
          │ network concentrator │
          │         130          │
          └─────────────────────┘
                     │
                     ▼
          ┌─────────────────────┐
          │  Receive requested data │
          │         140          │
          └─────────────────────┘
                     │
                     ▼
          ┌─────────────────────┐
          │  Issue further requests │
          │      up to limit     │
          │         150          │
          └─────────────────────┘
```

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020336379 A1